# EUROPEAN PATENT APPLICATION

(11) **EP 4 487 669 A1**
(43) Date of publication of application: **08.01.2025**
(21) Application number: 24175379.7
(22) Date of filing: 13.05.2024
(51) Int. Cl.: A01D 34/00

(54) **ROBOTIC WORK TOOL**

(30) Priority: 06.07.2023 SE 2350862
(71) Applicant: Husqvarna AB, 561 82 Huskvarna (SE)
(72) Inventor: Hellgren, Elvira, Huskvarna (SE)

(57) **Abstract**

A robotic work tool (1) comprises a control unit, which is configured for receipt of malfunction signals and for issuing navigational instructions to driving motors of the work tool (1). The control unit is further configured for the issuance of navigational instructions for the return of the work tool (1) to a service point on receipt of a malfunction signal.

A method of running a robotic work tool (1), comprises the steps of: an iterative issue of navigational instructions from the control unit to driving motors of the work tool (1) and receipt of occasional malfunction signals from one or more units of the work tool (1). Navigational instructions for return to a service point (3) are issued, when a malfunction signal is received.

A system comprises a robotic work tool (1), a remote device, and a dedicated app stored in the remote device.

## Description

### Field of the invention

The present invention relates to a robotic work tool comprising a control unit, the control unit being configured for receipt of malfunction signals and for issuing navigational instructions to driving motors of the work tool.

The invention also relates to a method of running a robotic work tool comprising a control unit, the method comprising the steps of: an iterative issue of navigational instructions from the control unit to driving motors of the work tool, and receipt of occasional malfunction signals from one or more units of the work tool.

Finally, the invention relates to a system comprising a robotic work tool.

### Background

DE102021100121A1 discloses a device for determining whether a robotic work tool has become stuck during its work in a work area. This device includes a detection unit, which detects signals from a signal transmitter somewhere in the work area. The detection unit detects changes of the strength of the detected signal, thereby determining whether the robotic work tool remains in the same position for a considerable time, i. e. whether the work tool is stuck.

When this happens, the cutting device is raised, such that the drive wheels of robotic work tool may contact the ground. The robotic work tool is then configured to turn left and right alternatingly, in order to release itself from the stuck condition.

This construction may work when the robot is stuck in a single location. However, situations where there are malfunctions that do not affect the ability of the work tool to move, are neither detected nor remedied.by this device. Instead, as long as the robotic work tool is able to move, it will keep on running its course in the work area. On the other hand, if the efforts to release the robots fail, the robot may run out of battery charge. The user will in that case not only have to release the robot from its position, but also to carry, or otherwise transport, it back to its charging station.

Another related problem is that it would be undesirable that a malfunctioning robotic work tool stops in its place regardless of the type of malfunction. If the robot stands still for an extended amount of time, the battery may also lose its charge, and a user may have the burden of returning it to the charging station.

### Summary

It is an object of the present invention to solve, or at least mitigate, parts or all of the above mentioned problems. To this end, there is provided a robotic work tool wherein the control unit is further configured for the issuance of navigational instructions for the return of the mower to a service point on receipt of a malfunction signal.

Hereby the robotic work tool may return to a service point, such as the charging station, of its own accord, when there is a malfunction. A user will not have to find and correct the malfunction in the position where it has occurred. The risk is also reduced that the robotic work tool runs out of battery charge, while in vain trying to overcome the malfunction. Hence the user avoids having to carry the mower to the charging station. Only the feature giving rise to the malfunction signal may have to be disabled during the return trip. An exception is, of course, safety related functions, which are crucial for allowing the robotic work tool to drive safely. If further malfunction signals are received during the return trip, the robotic work tool 1 may have to the necessary steps called for by the further malfunctions, including coming to a complete stop.

In one embodiment the work tool further comprises a cutting disk and a cutting disk motor, and the cutting disk and the cutting disk motor are configured to issue malfunction signals in case of a blockage of the cutting disk.

Hereby, in case of a blockage of the cutting disk, the cutting function is disabled, and the mower is still able to navigate and drive back for service. During the return trip, no cutting is performed, but the blockage may be removed, and any damages may be repaired, so the mower may quickly be back in regular operation without undue burden to the user. Since it is not unsafe to disable the cutting, the robotic work tool may still drive back to a service point, such as the charging station, without any risks.

In a further embodiment, the cutting disk is configured to be raised on a malfunction signal therefrom.

Hereby the resistance arising from the contact with the grass may be as low as possible during the trip back to the service point. This means that the power consumption may be minimized, and hence the risk of an unwanted stop due to a low battery charge is reduced. Another advantage with raising the cutting disk on blockage thereof is that an object causing the blockage may come loose when the cutting disk is raised. If this happens, the cutting disk may no longer be blocked, and the work tool may be configured to no longer issue a malfunction signal. In this case, the work tool may be configured to resume its work. Preferably the work tool is configured to move away from the site where the blockage was released, such that a resumption of the cutting may start some distance away. The object that caused the blockage will hence be less likely to get stuck in the cutting disk again.

In some embodiments the work tool further comprises a positional device for tracking the position of the work tool, and a communication device, and the control unit is configured to transmit positional information to a remote receiver via the communication device of the location of the work tool at the time that the malfunction signal is received.

Hereby a position of the malfunction is registered. This may enable the user to find the site and look for reasons for the malfunction, as well as remedy any problems that may cause further malfunctions in the future, e. g. remove objects that may cause a blockage of the cutting disk. In some embodiments, the work tool may be configured to transmit positional information at the event of a ceased malfunction, such as a released blockage. The user may then find that site, in search of any objects that need to be removed.

According to a second aspect, parts or all of the above mentioned problems are solved, or at least mitigated, by a method comprising a step of issue of navigational instructions for return to a service point, when a malfunction signal is received.

Hereby the robotic work tool may navigate in the work area according to one of many possible work schedules. It may return to a service point, such as the charging station, of its own accord, when there is a malfunction. A user will not have to find and correct the malfunction in the position where it has occurred. The risk is also reduced that the robotic work tool runs out of battery charge, while in vain trying to overcome the malfunction. Hence the user avoids having to carry the mower to the charging station. Only the feature, which is giving rise to the malfunction signal may have to be disabled during the return trip.

In a further embodiment, the method comprises a step of determining whether the malfunction relates to a safety feature.

Hereby it may be determined whether it is safe to let the robotic work tool travel back to the service point. If the malfunction relates to a safety feature, the work tool should not be allowed to travel back to the service point but should remain in its place, until the user localizes the mower and determines the reason for the malfunction manually. The malfunction may then be remedied on site, or the robotic work tool may have to be transported from the site.

In a still further embodiment, the method comprises a step of disabling the malfunctioning feature before allowing the work tool to return to the service point if the malfunction does not relate to a safety feature.

Hereby a trip back to the service point may be performed safely, albeit not with complete functionalities. Preferably, the method involves a step of checking that no malfunctions are registered before the robotic work tool starts a new work session.

In yet a further embodiment, the disabling of the malfunctioning feature comprises raising a stopped cutting disk to its maximum height.

Hereby the cutting disk, and possibly an object stuck therein, may be less likely to impede a trip back to a service point, since the friction from the lawn may be less. In some cases, the raising of the cutting disk may, as such, cause a release of the blocking. Since this may happen, it is advantageous that a subsequent step, after the malfunction signal has ceased, is to let the work tool move some distance away from the position before the cutting disk is lowered again. Since there is no longer a malfunction, the work tool does not have to return to a service point, and its previous work cycle may be resumed.

In some embodiments the method comprises a step of disabling all features of the work tool if the malfunction relates to a safety feature.

Hereby the work tool is not allowed to travel back to the service point but remains in its place, since the malfunction relates to a safety feature. The user may then have to localize the mower and determine the reason for the malfunction manually. The malfunction may be remedied on the site, or the work tool may have to be transported to a place where repair is possible.

In some embodiments the method comprises a step that positional information is sent from the work tool to a remote device.

Hereby the positions of the malfunction and of any release of the blockage may be registered, and information thereof may be sent to the user. The user may then remove any obstacles from the work area in those positions, thereby preventing renewed malfunctions. In some embodiments, the method may include that the robotic work tool avoids an area in the vicinity of the positions. The avoidance may be set for a predetermined time period, allowing the user to check the area and remove the cause of malfunction, and the avoidance may be automatically terminated at the end of the time period. As an alternative, the avoidance may be set for an indefinite time, and may be terminated by an active reset by the user.

In a further embodiment, the method comprises a step of receipt of the positional information by the remote device, which includes a dedicated app.

Hereby the user may easily oversee the work of the work tool, even remotely, e. g. from their cell phone. The position of a malfunction may be recorded, for remedy of either the work tool, the work area, or both. The user may also be able to manually reset the status of the work tool and of sections in the work area as needed.

In a third aspect of the invention, the mowing system also includes a remote device, and a dedicated app stored in the remote device.

Hereby the user, or several users, may access and control the robotic work tool and its operation in a remote device, which may be shared by several users, without any downloads to their separate cell phones.

It is noted that embodiments of the invention may be embodied by all possible combinations of features recited in the claims. Further, it will be appreciated that the various embodiments described for the device are all combinable with the method as defined in accordance with the second aspect of the present invention, and vice versa.

### Brief description of the drawings

The above, as well as additional objects, features and advantages of the present invention, will be better understood through the following illustrative and nonlimiting detailed description of preferred embodiments of the present invention, with reference to the appended drawings, where the same reference numerals will be used for similar elements, wherein:
- Fig. 1: is a diagrammatic view in perspective of a robotic work tool in a work area; and
- Fig. 2: is a flow chart illustrating a method of operating the robotic work tool.

All the figures are schematic, not necessarily to scale, and generally only show parts which are necessary in order to elucidate the embodiments, wherein other parts may be omitted.

### Detailed description of the exemplary embodiments

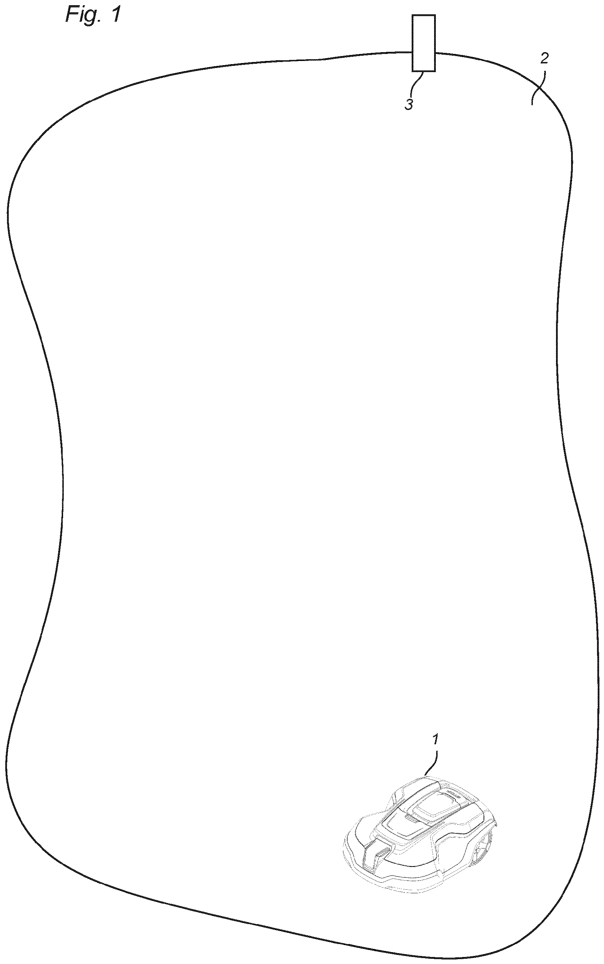

Fig. 1 illustrates a robotic work tool 1 in a work area 2. The robotic work tool may in some embodiments be a robotic lawn mower, but other embodiments include a golf ball collector, a leaf raker, etc. The robotic work tool 1 moves around in the work area 2 according to a work schedule, which may be based on a map, and may be influenced by time, weather, resistance from the lawn, etc. When a cycle of the work schedule is finished, the robotic work tool 1 may find its way to a charging station 3, for charging its battery to be ready for the next work cycle. If the battery would run low during a work cycle, the robotic work tool 1 may interrupt its work cycle and go to the charging station 3 when needed. After the charging, the robotic work tool 1 may resume its work at that point in the work schedule where it was interrupted.

The robotic work tool 1 remains in the work area 2 by any of the means known in the art, such as physical fences, GPS navigation, electric boundary wires, etc. Also, parts of the work area 2 may be sealed off, temporarily or permanently, by similar arrangements as for the outer boundaries.

Occasionally, the robotic work tool 1 may encounter an unexpected obstacle such as branches, twigs, cones, stones, pebbles, puddles, etc., which may cause a malfunction in the robotic work tool 1. The malfunction may relate to the wheels, a cutting disk, a collision detector, a lift detector, etc. It may be due to an obstacle getting stuck and blocking one or more moving parts of the robotic work tool 1. The malfunction may in some cases relate to an excess of water in the robotic work tool 1.

There are obviously many unexpected situations that may lead to a malfunction of the robotic work tool 1. However, not all malfunctions require that the robotic work tool 1 is completely shut down. In many cases the robotic work tool 1 may still be able to move and could drive safely back to the charging station 3, acting as a service point, where the user may easily find it, and where it does not have to be transported far for a repair or a remedy of the malfunction. Only in the cases where the malfunction in itself makes a travel back to the service point 3 impossible, such as a blocked wheel, or the cases wherein the malfunction relates to a safety feature, and the robotic work tool 1 cannot travel safely, would the user have to find and pick up the robotic work tool 1 for a remedy of the malfunction. In consideration of the facts that some work areas 2 may be very large, and some embodiments of the robotic work tool 1 are very heavy, it is a great advantage that the robotic work tool is able to return to the service point 3 on its own.

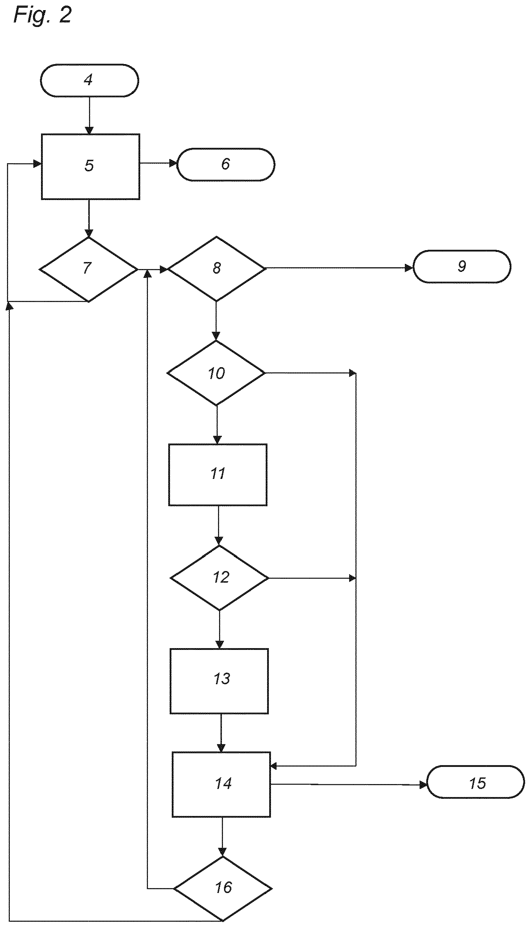

Fig. 2 illustrates one general structure for a work cycle of the robotic work tool 1. The structure may include further steps, as described below, including steps and measures that are taken manually by a user.

The robotic work tool 1 starts working in step 4. Its regular work cycle is performed in step 5. As mentioned above, the work cycle may be interrupted if the battery runs low, and the robotic work tool 1 may have to return to the charging station 3. Thereafter, the work cycle is resumed. Such an interruption for charging has been omitted from the illustration of Fig. 2.

During the regular work cycle of step 5, the processor of the robotic work tool 1 continuously awaits a malfunction signal in step 7. If there are no malfunctions, the regular work cycle of step 5 continues for the robotic work tool 1, and the regular work cycle is eventually brought to an end in step 6.

In case a malfunction signal is detected in step 7 during the regular work of step 5, a decision will be taken in step 8 whether the malfunction relates to a safety feature. If that is the case, the robotic work tool 1 will immediately stop its work in step 9.

Simultaneously with the detection of a malfunction signal in step 7, positional information regarding the robotic work tool 1 may be transmitted to a remote receiver. Such a receiver may be included in the charging station or some other similar service point. The receiver may also be a dedicated mobile device carried by the user. As an alternative, the receiver may be a cell phone with a dedicated app. The positional information may be used for locating the robotic work tool 1, if it has come to a complete stop.

If the malfunction signal is not found, in step 8, to relate to a safety feature, a decision is taken in step 10 whether the malfunction signal relates to new condition or to an ongoing, already detected, malfunction. If the malfunction condition is new, the malfunctioning feature is disabled in step 11. If the condition has been detected previously, the malfunctioning feature has already been disabled, and the robotic work tool 1 is directed in step 14 to return to the charging station 3 or some other service point.

In case the feature disabled in step 11 is related to a feature crucial for the motion of the robotic work tool 1, the robotic work tool 1 may remain in its position, and the user may find it based on the transmitted positional information. After the user has located the robotic work tool 1, they may remedy the malfunction at the site, if possible, e. g. by removing a twig blocking the wheel etc. If it is not possible to remedy the motion malfunction on site, the robotic work tool 1 may have to be transported back to a service point, e. g. by manual carrying or by a trailer.

After the malfunctioning feature has been disabled in step 11, it is determined in step 12 whether the malfunctioning feature relates to a cutting disk of the robotic work tool 1. If so, the cutting disk is raised to its uppermost position in step 13. At best, this may result in that a blockage of the cutting disk is released, and the malfunction is hence remedied. If a blockage of the cutting disk is not released by this action, the cutting disk is at least in a position wherein it has the least contact with the lawn and hence causes the least frictional resistance against a motion across the lawn, when the robotic work tool 1 is directed in step 14 to return to the charging station 3 or some other service point. In robotic work tools 1, other than robotic lawn mowers, a similar procedure may be undertaken: The malfunctioning feature is disabled, and any parts associated with the feature are lifted. Instead of a cutting disk, there may hence be a leaf rake, a golf ball picking device, etc.

If the malfunction does not relate to the cutting disk or similar, the robotic work tool 1 is also directed in step 14 to return to the charging station 3 or service point. When the robotic work tool 1 has reached the charging station 3 or some other service point, the return procedure is ended in step 15. The user may then take the steps necessary for remedy or repair of the malfunction.

The positional information transmitted may enable the user to find the site of the malfunction, and possibly find the cause of the malfunction, such as twigs, branches, cones, etc. which may have got stuck in the cutting disk. Such obstacles may be removed by the user, and unnecessary future malfunctions may be avoided.

During the return to the service point in step 14, the processor of the robotic work tool 1 continuously awaits a malfunction signal in step 16. If there is still a malfunction, the steps 8 to 13 are repeated, and the return trip of step 14 continues, and the return is eventually ended in step 15. If there is no malfunction signal anymore, which may be the case e. g. if a blockage of the cutting disk has ceased, the robotic work tool 1 may return to its regular work cycle of step 5, with renewed queries for a malfunction signal in step 7, as described above.

If the regular work cycle of step 5 is resumed, the positional information may, in some embodiments of the robotic work tool 1, be utilized to avoid new malfunctions. One possibility is that the cutting disk, or corresponding device, may not be lowered again, until the robotic work tool 1 has moved out of a zone near the position of the previous malfunction. A distance from the position of malfunction may be set for determining the size of the malfunction zone. Also, the robotic work tool 1 may, in some embodiments, avoid this malfunction zone during the rest of the work cycle. In some embodiments the malfunction zone may be avoided until the user makes a manual reset, preferably after checking the area for potential obstacles therein.

The invention has mainly been described above with reference to a few embodiments. However, as is readily appreciated by a person skilled in the art, other embodiments than the ones disclosed above are equally possible within the scope of the invention, as defined by the appended patent claims.

In the claims, the word "comprising" does not exclude other elements or steps, and the indefinite article "a" or "an" does not exclude a plurality.

## Claims

1. A robotic work tool (1) comprising a control unit, the control unit being configured for receipt of malfunction signals and for issuing navigational instructions to driving motors of the work tool (1), wherein the control unit is further configured for the issuance of navigational instructions for the return of the work tool (1) to a service point on receipt of a malfunction signal.

2. The work tool (1) according to claim 1, wherein the work tool (1) further comprises a cutting disk and a cutting disk motor, and the cutting disk and the cutting disk motor are configured to issue malfunction signals in case of a blockage of the cutting disk.

3. The work tool (1) according to claim 2, wherein the cutting disk is configured to be raised on a malfunction signal therefrom.

4. The work tool (1) according to any of claims 1 to 3, wherein the work tool (1) further comprises a positional device for tracking the position of the work tool (1), and a communication device, and the control unit is configured to transmit positional information to a remote receiver via the communication device of the location of the work tool (1) at the time that the malfunction signal is received.

5. The work tool (1) according to any of claims 1 to 4, wherein the work tool is a lawn mower.

6. A method of running a robotic work tool (1) comprising a control unit, the method comprising the steps of: an iterative issue (5) of navigational instructions from the control unit to driving motors of the work tool (1), and receipt (7, 16) of occasional malfunction signals from one or more units of the work tool (1), wherein the method comprises a step (14) of issue of navigational instructions for return to a service point (3), when a malfunction signal is received.

7. The method according to claim 6, wherein the method comprises a step (8) of determining whether the malfunction relates to a safety feature.

8. The method according to claim 7, wherein the method comprises a step (11) of disabling the malfunctioning feature before allowing the work tool (1) to return to the service point (3) if the malfunction does not relate to a safety feature.

9. The method according to claim 8, wherein the disabling of the malfunctioning feature comprises raising (13) a stopped cutting disk to its maximum height.

10. The method according to claim 7, wherein the method comprises a step of disabling all features (9) of the work tool (1) if the malfunction relates to a safety feature.

11. The method according to any of claims 6 to 10, wherein the method comprises a step (7, 16) that positional information is sent from the work tool (1) to a remote device.

12. The method according to claim 11, wherein the method comprises a step of receipt of the positional information by the remote device, which includes a dedicated app.

13. A system comprising a robotic work tool (1) according to any of claims 1 to 5, a remote device, and a dedicated app stored in the remote device.
